# EUROPEAN PATENT SPECIFICATION

(11) **EP 1 816 790 B1**
(45) Date of publication and mention of the grant of the patent: **23.04.2008**
(21) Application number: 06290195.4
(22) Date of filing: 02.02.2006
(51) Int. Cl.: H04L 12/26, H04L 12/24, H04M 3/30

(54) **Communication interface and testing method therefore**
Kommunikationsschnittstelle und Prüfverfahren dafür
Interface de communication et procédé d'essais correspondant

(43) Date of publication of application: 08.08.2007
(73) Proprietor: Alcatel Lucent, 75008 Paris (FR)
(72) Inventor: Fossion, Marc, 5140 Ligny (BE)
(74) Representative: Schmidt, Werner Karl

(56) References cited:
- US-A1- 2005 025 061
- US-B1- 6 507 199

## Description

The present invention relates to a bi-directional communication interface and to a method for testing it for defects.

A preferred but not exclusive application of the present invention is a DSL (digital subscriber line) modem and a method for testing it. The modem may be part of a digital subscriber line access multiplexer (DSLAM) or of a subscriber's equipment.

Alleged or real failures of DSLAMs operating in the field contribute significantly to the operating cost of a telecommunication network. Since the DSLAMs have to be installed close to a subscriber's premises, it is not possible to group many of them at a same location. Whenever one of these DSLAMs fails or seems to fail, service personnel has to be sent out to check the DSLAM, involving considerable costs for the operator of the network.

Failures may occur in DSLAMs for various reasons. A frequent cause of failure are their power supply devices. A failure of these is easily detected from a management station of a network to which the DSLAMs are connected, since they cause the complete circuit board of the DSLAM to fail. Other failures which are not so easily detected are single component damages. These occur quite frequently with digital or analog ASICs, since these are active silicon components with a high degree of integration, the transistors of which are sensitive to overvoltages, electromagnetic interference, etc.

Another important cause of failures are line drivers and components associated to these, since they have a high power dissipation, and because they are directly connected to the telephone line (subscriber line), where overvoltages due to lightning may occur.

Another frequent cause of communication problems between DSLAM and subscriber modems are errors in the configuration of ATM and IP layers of the various network components such as switches, routers, and broadband access servers to which the DSLAM is connected on the network side. Such errors can make the DSLAM appear defective, while it is in fact only incorrectly controlled.

Similar communication problems may be caused by the subscriber's modem, if settings in the subscriber's equipment are incorrect.

In particular in the latter cases, it is quite frequent that repair staff is sent to a DSLAM because it seems defective, but in the end, the effort is in vain, because the reason for a failure is somewhere else.

Network operators are of course interested in keeping the number of such visits as low as possible. In order to meet this demand, DSLAMs are severely tested before delivery.

In a conventional pre-delivery test, all xDSL ports of a DSLAM card are connected to a reference impedance of 100 ohms. Then a set of automatic tests carried out by a processor of the DSLAM allows for detection of hardware problems in the DSLAM. As this type of test needs a known reference impedance, it cannot be carried out in the field, where telephone lines are connected to the DSLAM ports, the impedance of which is not known exactly, and on which there may be noise signals of various origins.

A paper by Acterna, LLC, Germantown, Maryland entitled "Verification of ADSL Modem Interfaces as per ANSI T1.413 and ITU-T G.992.1" describes a method for testing an ADSL transmitter in which the transmitter is connected to an ADSL line simulator. In the spectrum of DMT carriers that form a conventional ADSL signal, a gap is formed by suppressing one or more carrier frequencies, so that intermodulation noise generated at the suppressed frequency can be observed without background, and a signal-noise ratio at the suppressed frequency or frequencies is obtained from measured power levels of said intermodulation noise and of an unsuppressed DMT carrier to the left or the right of the gap.

Another solution is disclosed in the US 6,507,199. Here a test signal is sent to measure the operating properties of a subscriber line. The echo signal is detected at the subscriber module and interpreted for evaluating the operating properties.

The so-called boot self-test, which is conventionally performed by a DSLAM when powered up, allows to detect some hardware problems, mainly in the digital circuitry of the DSLAM. Problems of the analog front-end of the DSLAM and of the subscriber line are not detected. Moreover, the power-up self-test cannot detect problems that arise during operation, because in order to repeat the self-test, the DSLAM would have to be re-booted, which would imply an interruption of service for all users connected to it, which cannot be tolerated.

Another conventional testing method which is useful for testing the communication between the DSLAM and a subscriber's modem implies the use of two protocol simulator circuits. For carrying out this test, the connection between the DSLAM and the subscriber's modem is interrupted using relays placed between the DSLAM and the telephone line, and the DSLAM is connected to the protocol simulator which simulates the subscriber's modem, and the subscriber's modem is connected to a DSLAM simulator. If it turns out in the test that the subscriber's modem cannot communicate with the simulator associated to it, but the DSLAM can, is shown that the DSLAM is operative, and that the defect must be at the subscriber's side. Such a test can be carried out without sending staff to the DSLAM, if the two simulators and remote-controlled relays for establishing the required connections are present at the DSLAM. The use of this technology therefore requires considerable investment.

The object of the present invention is to provide a novel method for testing a bi-directional communication interface such as a xDSL modem which is economic to implement and which is suitable for execution under remote control.

The object is achieved by a method according to claim 1. Dependent claims provide embodiments.

The invention is based on the idea that in such a bi-directional communication interface, the signal from the transmitter reaches the receiver with an amplitude which exceeds that of a signal received from another communication interface at the remote end of the transmission line by several tens of decibels, so that the signal from this remote interface is discernible at the receiver only if extreme efforts are undertaken to prevent the transmitter from generating noise in the second frequency range. If the interface is damaged, this is likely to have an effect on the amount of noise in the response signals. In each response signal, this noise is likely to have an unknown, but definite phase relationship to the associated test signal. Superimposing the response signals in synchronism to the reference time mark will cause the noise components due to the test signals to interfere constructively, whereas stochastic noise will tend to be cancelled. Therefore, by superimposing the response signals, noise caused by the communication interface can be observed while noise from other sources is suppressed, allowing to judge the quality of the interface.

Preferably, a trigger signal is supplied as the reference time mark to both the transmitter and the receiver alike, e.g. from a clock of the interface. An alternative is to include the reference time mark in the test signal emitted by the transmitter and to re-derive it at the receiver side from what is received there. Preferably, it will be derived from the test signal received by the receiver (7) in the first frequency range, since this will in most cases be the most powerful signal component received.

The judgment of step c) is preferably carried out based on the amplitude of the superimposed response signal.

In a preferred embodiment, steps a) and b) each have two phases, wherein in a first phase of step a) the transmitter is amplitude controlled to emit a test signal in a first frequency range at a first amplitude, and in a first phase of step b) a first amplitude of the response signal received at the same time at the receiver is detected, in a second phase of step a) the transmitter is amplitude controlled to emit the test signal at a second amplitude, and in a second phase of step b) a second amplitude of the response signal received at the same time at the receiver is detected, and in step c) the interface is judged to be in order or not in order based on the first and second amplitudes of the superimposed response signals obtained in said first and second phases, respectively.

It should be noted that steps a) and b) and the first and second phases thereof can be carried out in any order. In order to facilitate the superimposing process, it is advisable to carry out the first phases of steps a), b) in one time interval and their second phases in another time interval.

If the transmitter is heavily damaged, so that it does not transmit at all or only generates noise, or if the receiver is dead, the amplitude detected by the receiver will always be the same, regardless of how the transmitter is driven. If the transmitter is only slightly damaged, so that it can still emit a signal, but the amount of noise it generates is increased, this can also be detected. Accordingly, there are various ways in which amplitude-based judgment may be implemented.

According to a first preferred embodiment the amplitudes of the test signal are selected such that at the first amplitude the transmitter is expected not to generate noise in the second frequency range, whereas at the second amplitude of the test signal it is expected to do so. Step c) then comprises the steps c1) of comparing the difference amount between the first and second amplitudes of the received signal to a given limit and c2) of judging the interface to be out of order if the difference amount is below a given limit. In this case, if the difference amount is less than expected, there is a high probability that either the transmitter is dead or that it generates excessive noise at any amplitude, or that the receiver is dead. In any of these cases, the interface must be judged to be out of order.

It should be noted, of course, that when it is said that the transmitter "does not generate noise", this can not mean that no noise exists, but is only a shorter way of saying that the power level of the noise is below a certain threshold so that it does not disturb the operation of the communication interface.

If the difference amount between the first and second amplitudes of the received signal is above the given limit, this does not yet necessarily imply that the interface is in order. Preferably the test procedure continues by reducing the second amplitude and repeating steps b) and c1) until the difference amount is below the given limit, and the interface is judged to be out of order if the thus obtained second amplitude is below a predetermined limit which corresponds to a maximum amplitude at which the transmitter should be able to operate without generating excessive noise in the second frequency range.

Alternatively, if the difference amount between the first and second amplitudes of the received signal is above the given limit, the test procedure continues by increasing the first amplitude and repeating steps b) and c1) until the difference amount is below the given limit, and the interface is judged to be out of order if the thus obtained first amplitude is below below a predetermined limit.

According to a third embodiment, at the first amplitude of the test signal the transmitter is expected not to generate noise in the second frequency range, but no assumption need be made about the second amplitude. In this case, if the difference between first and second amplitudes of the received signal is below a given limit, the second amplitude of the test signal is increased, and steps b) and c1) are repeated until either the second amplitude has reached a predefined maximum level or the difference amount is above the given limit, and the interface is judged to be out of order if the thus obtained second amplitude is below a predetermined limit, i. e. if the transmitter begins to generate excessive noise at an unexpectedly low amplitude level.

Conversely, the second amplitude of the test signal may be selected so that the transmitter is expected to generate noise at the second frequency whereas no assumption need be made about the first amplitude of the test signal. In this case, if the difference between the first and second amplitudes of the received signal is below a given limit, the first amplitude of the test signal is decreased and steps a) and c1) are repeated until either the first amplitude has reached a predefined minimum level, which may be 0, or the difference amount is above the given limit, and the interface is judged to be out of order if the thus obtained first amplitude is above a predetermined limit.

In order to facilitate distinguishing noise from the transmitter from other signal components in the received signal, the test signal preferably has a plurality of discrete spectral components, and the frequency of the received signal is a sum or a difference of the frequencies of the spectral components of the test signal. If the transmitter exhibits non-linear behaviour, i.e. if frequency-mixing occurs between the spectral components of the test signal, noise will result at this sum or difference frequencies.

In order to find a defect in the interface before it becomes serious enough to affect data communication, the above described steps a) to c) should be repeated periodically.

According to a preferred application of the method, the interface is a xDSL subscriber line interface, and the test signal is a DMT signal.

The DMT signal may comprise at least one carrier modulated with payload data, because for carrying out the method of the invention, it is not necessary to interrupt data communication by the subscriber line.

The interface which is tested by the above-described methods may be a subscriber's premises interface, connected to the telephone line on the one hand and to a subscriber's terminal, on the other. Preferably the method is applied to an interface between the telephone line and a communication network, and it further comprises the step d) of transmitting a message indicating one of the first and second amplitudes of the received signal, the difference between these two amplitudes and the result of the judgement to a central station of the communication network, where information about the status of various interfaces connected to the network may be gathered in order to coordinate maintenance operations.

The interface may carry out the above described test method autonomously, without requiring an external trigger signal. However, the interface should also be adapted to carry out above steps a) to d) when it receives a trigger command from the central station of the network. In this way, when a subscriber notifies the central station of communication problems, a test may be carried out at once under remote control, and a subscriber can be informed of the results, so that he either knows for sure that the problem is caused by his own equipment and that it is his responsibility to solve it, or that the problem is on the network side and the network operator will take care of it.

A modem for carrying out the method of one of the preceding claims comprises a transmitter, a receiver, a port for connecting the transmitter and receiver to a transmission line, control means for causing the transmitter to repeatedly transmit the test signal associated to the reference time mark, and means for superimposing response signals such that the reference time marks of their associated test signals are synchronized.

Means for carrying out the judgement might be provided in the central station, preferably they are provided in the modem in order to keep the amount of messages exchange between the modem and the central station small.

Further features and advantages of the invention will become apparent from the subsequent description of embodiments thereof referring to the drawings.
- Fig. 1: is a block diagram of a telecommunication network in which the invention is applicable;
- Fig. 2: is a block diagram illustrating a network side modem, a subscriber's modem and a subscriber line connecting the two; and
- Fig. 3: is a flowchart of a test method executed by the network side modem of Fig. 2.

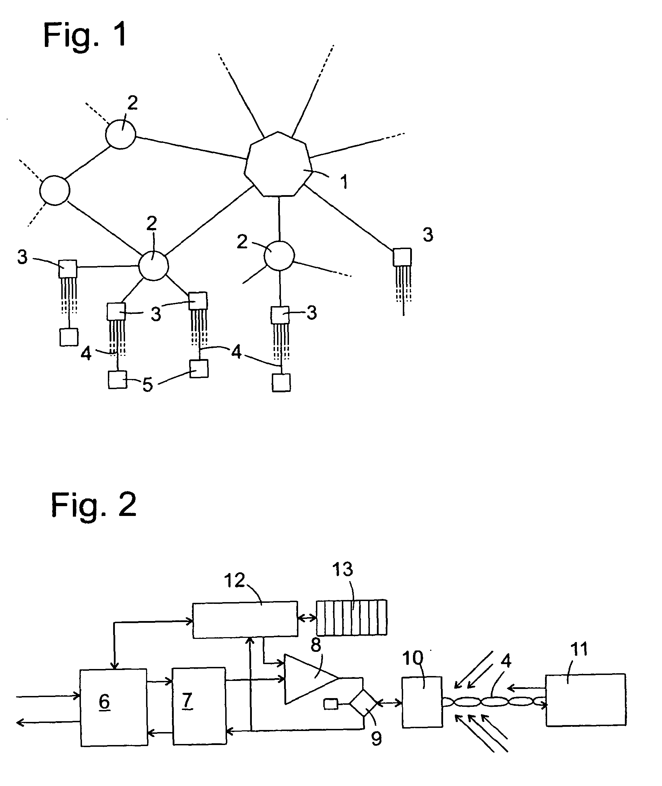

Fig. 1 is a block diagram of an IP network comprising a central node 1 and a plurality of secondary nodes 2, to which DSL access multiplexers (DSLAMs) 3 are connected. The DSLAMs 3 provide access to the IP network and to a telephony network, not shown, to subscribers who have terminals 5 connected to them by telephone lines 4. Each DSLAM 3 has several telephone lines 4 connected to it and serves several subscribers.

A DSLAM, shown schematically in Fig. 2, comprises a digital signal processor 6 which receives from the network data packets intended for a subscriber associated to it and outputs data packets into the network. The DSP 6 communicates with a so-called analog front-end circuit 7, which converts digital data it receives from DSP 6 into analog downlink signals of a form suitable for transmission on the telephone line 4 and supplies these to a line driver 8 in order to be amplified. Conventionally, these downlink signals are a DMT signal comprising a plurality of carriers at various frequencies in a downlink frequency range, on which the digital data are modulated.

A hybrid circuit 9 has an input port connected to the output of line driver 8, an output port connected to an input of analog front-end 7, and a bi-directional port connected to a telephone line 4 via a high pass filter 10. Analog front end 7, line driver 8 and hybrid circuit 9 may be regarded as a modem of the DSLAM 3. At the remote end of the telephone line 4, there is a subscriber's modem 11. Since all these components and their functions are familiar to the skilled person, they need not be explained in greater detail here.

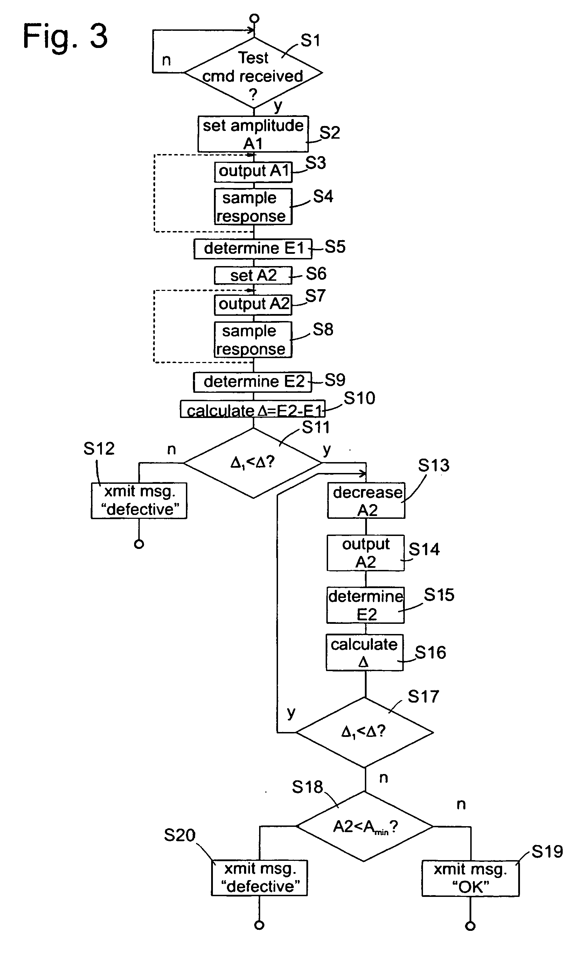

A remarkable feature of the DSLAM is controller 12, which is connected to the DSP 6, to the line driver 8, to the output port of hybrid circuit 9, and to a memory 13. An example of an operating procedure of controller 12 is described referring to the flowchart of Fig. 3.

In the first step S1 of the procedure the controller 12 waits for a test command to trigger the execution of a test procedure. The test command may be generated by an internal timer of the DSLAM modem 3 itself, or it may be received from central node 1 via the network. The central node 1 may issue such tests commands to the DSLAMs 3 connected to the network at regular time intervals, in which case an internal timer of the modem is not necessary, or it may issue the test command at arbitrary times upon instruction from an operator, e. g. when the operator receives a complaint from a subscriber that his terminal can not communicate properly.

When such a command is received, the controller 12 proceeds to step S2, sets the contents of memory 13 to zero and sets the amplitude of a test signal to be emitted by line driver 8 to a value A1 where the line driver 8 is expected to operate linearly, i.e. where the generation of a signal by the line driver 8 in a downlink frequency range is not accompanied by generation of noise in an uplink frequency band reserved for transmission from the subscriber to the network, so that an uplink signal from the subscriber's terminal 11 is not concealed by noise from the line driver 8 although it is strongly attenuated in subscriber line 4. A test signal comprises one or more DMT carriers emitted over a predetermined duration.

The amplitude A1 set by controller 12 in step S2 may be zero, but preferably it is positive and high enough that payload data modulated on the various carriers of the test signal can be decoded at the subscriber's side.

Since data transmission may continue while emitting the test signals, the test procedure can be carried out at any time, regardless of whether data are being transmitted to the subscriber at the same time or not.

In step S3 the controller 12 receives from DSP 6 a reference time mark indicating the instant a test signal begins to be emitted at the set amplitude A1.

Alternatively, the controller 12 might be provided with a threshold detector for deriving as said reference time mark symbol amplitude transitions of predetermined carriers in the output of analog front-end 7 or from in an echo of the test signal at the receiver port of front-end 7.

While the test signal is transmitted, various sources contribute to the signal that arrives at this receiver port. There may be payload signals from the subscriber equipment 11, crosstalk which is coupled into the subscriber line 4 from adjacent lines connected to the same DSLAM, and noise from the line driver, which is directly transmitted through hybrid circuit 9 to the receiver port. Since the DMT signal emitted by line driver 8 has a spectrum formed of discrete lines, the noise it generates also has a discrete spectrum, the lines of which are at sum and difference frequencies of the lines of the DMT signal.

Triggered by the reference time mark, the controller 12 filters from the signal received at the receiver port of front-end circuit 7 a response signal at a carrier frequency which is a sum or difference of frequencies of the test signal and whose amplitude is zero in the test signal, derives a series of time-domain samples from this response signal and adds each sample to the contents of a cell of memory 13 in step S4.

By carrying out steps S3, S4 a predetermined large number of times, a superimposed response signal is obtained in memory 13 in which contributions to the response signal which are not caused by the test signals, such as crosstalk from adjacent modems and transmission lines, tend to be very small with respect to the contributions caused by the test signals. The amplitude E1 of the superimposed response signal is determined in step S5.

In a next step S6, the control circuit 12 sets the output amplitude of line driver 8 to a high level A2 at which harmonic distortion is expected to occur, and again, steps S7 of emitting the test signal at the set amplitude A2 and S8 of obtaining a superimposed response signal are carried out. In step S9, the intensity E2 of the superimposed response signal is determined again.

While the intensity E1 is expected to originate from other noise sources than the line driver 8, E2 should have a significant contribution from the line driver 8.

In step S10, control circuit 12 calculates the difference Δ=E2-E1 between the intensities obtained in steps S5 and S9. In step S11, the difference Δ is compared to a predetermined threshold Δ₁. If Δ is below the threshold, the reason might be that the line driver 7 is destroyed, so that it transmits no signal at all, or that the receiver part of front-end circuit 7 is destroyed, so that a signal arriving at its receiver port is not detected. In either case, the DSLAM is found defective, and a message to this effect is transmitted to the central station in step S12, so that staff may be sent to repair the DSLAM 3.

If Δ is found to be above the threshold Δ₁ in step S11, the control circuit 11 proceeds to step S13, in which a new output amplitude level A2 for line driver 8 is determined, which is slightly less than that of step S6. The line driver 8 is set to this new output amplitude in step S14, and the resulting intensity E2 of the superimposed response signal is determined in step S15. Δ=E2-E1 is recalculated (S16), and the new Δ is compared to threshold Δ₁ again in step S17. If Δ is still above Δ₁, the procedure returns to step S13. If Δ is found to be less than the threshold Δ₁ in S17, the amplitude A2 set in step S14 is compared to a second threshold Aₘᵢₙ in step S18. If the amplitude A2 is above the second threshold Aₘᵢₙ, the line driver 8 can be operated at sufficiently high amplitudes without a serious degradation of the uplink signal by noise from the line driver 8, and it is decided that the modem of DSLAM 3 is in order (S19). If the set amplitude is below the threshold Aₘᵢₙ, it can be concluded that harmonic distortions begin already at rather low signal amplitudes, and that line driver 8 is defective (S20). The defect is not necessarily serious enough to prevent data communication over subscriber line 4 altogether, it may even not yet be noticeable for the subscriber. It is not necessary, therefore, to repair the defect at once, but it is advisable to repair it, when repair staff happens to be in the neighbourhood of the concerned modem, in order to prevent the defect from aggravating and becoming noticeable for the subscriber.

Of course, the procedure described above is only exemplary, and there are various possible alternatives to it. According to a first alternative, steps S1 to S12 are the same as described above, but steps S13 to S15 are replaced by increasing the lower one A1 of the two amplitudes A1, A2, output it and measuring the resulting intensity E1 at the receiver port. Steps S16, S17, S19, S20 are those of Fig. 3 again. Here the modem is found to be defective if in step S18, A1 is above a threshold Aₘₐₓ.

According to another alternative procedure, at first, the line driver 8 is set to emit the test signal at a first, low amplitude A1 at which the output signal is expected to be free from harmonic distortion. Then, successively higher output levels A2 of the line driver are set, and the difference Δ=E2-E1 between signal intensities E1, E2 measured at the receiver port at the initial low amplitude A1 and the subsequent higher ones A2 are compared to the threshold Δ₁. The amplitude A2 where harmonic distortion is observed for the first time is recorded and compared to a predetermined threshold Aₘᵢₙ. If it is higher than Aₘᵢₙ, the modem is determined to be in order; if it is below the threshold, there must be damaged parts in it.

Of course, the testing methods described above might also be carried out in the subscriber modem. In this case, the test command of step S1 would have to be generated automatically by the subscriber's equipment or input by the subscriber, and the steps S12, S19, S20 in which messages are transmitted to the central station should be replaced by steps of displaying appropriate messages on a display of the subscriber's equipment.

## Claims

1. A method for testing a bidirectional communication interface comprising a transmitter (8) and a receiver (7) connected to a same transmission line (4), wherein
a) a test signal in a first frequency range is repeatedly emitted (S3, S7, S14) by the transmitter (8), each of said emitted test signals being associated to a reference time mark,
b) response signals in a second frequency range associated to said test signals are received (S4, S8) at the receiver (7) such that the reference time marks of their associated test signals are synchronized, yielding a superimposed response signal,
c) based on the superimposed response signal, the interface is judged to be in order or not in order (S11, S18).
And **characterised in that**
in a first phase (S3) of step a) the transmitter (8) is amplitude controlled to emit (S2) the test signal in a first frequency range at a first amplitude (A1), and in a first phase (S4) of step b) a first amplitude (E1) of the response signal received at the same time at the receiver (7) is detected (S3),
in a second phase (S7) of step a) the transmitter (8) is amplitude controlled to emit (S4) the test signal at a second amplitude (A2), and in a second phase (S8) of step b) a second amplitude (E2) of the response signal received at the same time at the receiver (7) is detected (S5),
and in step c) the interface is judged (S6, S13) to be in order or not in order based on the first and second amplitudes (E1, E2) of the superimposed response signals obtained in said first and second phases, respectively.

2. The method of claim 1 wherein at the first amplitude (A1) of the test signal the transmitter (8) is expected not to generate noise at the second frequency whereas at the second amplitude (A2) of the test signal, the transmitter (8) is expected to generate noise at the second frequency, and step c) comprises the steps c1) of comparing the difference amount (Δ) between the first and second amplitudes (E1, E2) of the received signal to a given limit (Δ₁), and c2) of judging (S11) the interface to be out of order if the difference amount is below a given limit.

3. The method of claim 2 wherein if the difference amount (Δ) between the first and second amplitudes (E1, E2) of the received signal is above the given limit (Δ₁), the second amplitude (A2) of the test signal is reduced and steps b) and c1) are repeated until the difference amount Δ) is below the given limit, and the interface is judged (S17) to be out of order if the thus obtained second amplitude (A2) is below a predetermined limit (Aₘᵢₙ).

4. The method of claim 1 wherein at the first amplitude of the test signal the transmitter is expected not to generate noise at the second frequency, and if the difference between the first and second amplitudes of the received signal is below a given limit, the second amplitude of the test signal is increased and steps b) and c1) are repeated until either the second amplitude has reached a predefined maximum level or the difference amount is above the given limit, and the interface is judged to be out of order if the thus obtained second amplitude is below a predetermined limit.

5. The method of claim 1 wherein at the second amplitude of the test signal the transmitter is expected to generate noise at the second frequency, and if the difference between the first and second amplitudes of the received signal is below a given limit, the first amplitude of the test signal is decreased and steps a) and c1) are repeated until either the first amplitude has reached a predefined minimum level or the difference amount is above the given limit, and the interface is judged to be out of order if the thus obtained first amplitude is above a predetermined limit.

6. The method of any of the preceding claims, wherein steps a) to c) are repeated periodically and wherein the DMT signal comprises at least one carrier modulated with payload data.

7. The method of claim 6, wherein the interface (3) is between a subscriber line (4) and a communication network (1, 2), further comprising a step d) of transmitting (S12, S19, S20) a message indicating one of the first and second amplitudes of the received signal, the difference between these two amplitudes and the result of the judgment to a central station (1) of the communication network.

8. The method of claim 7, further comprising the step of sending a trigger command for carrying out steps a) to d) from the central station (1) of the network to said interface (3).

## Patentansprüche

1. Verfahren zum Testen einer bidirektionalen Kommunikationsschnittstelle mit einem Sender (8) und einem Empfänger (7), die an dieselbe Übertragungsleitung (4) angeschlossen sind, wobei
a) ein Testsignal in einem ersten Frequenzbereich vom Sender (8) wiederholt emittiert (S3, S7, S14) und jedes dieser emittierten Testsignale einer Referenz-Zeitmarke zugeordnet wird,
b) Antwortsignale in einem zweiten Frequenzbereich, der diesen Testsignalen zugeordnet ist, durch den Empfänger (7) empfangen werden (S4, S8), so dass die Referenz-Zeitmarken ihrer zugeordneten Testsignale synchronisiert werden und ein überlagertes Antwortsignal liefern,
c) die Schnittstelle basierend auf dem überlagerten Antwortsignal als "In Ordnung" oder "Nicht in Ordnung" klassifiziert wird (S11, S18),
und **dadurch gekennzeichnet, dass**
in einer ersten Phase (S3) von Schritt a) der Sender (8) über die Amplitude gesteuert wird zum Emittieren (S2) des Testsignals in einem ersten Frequenzbereich mit einer ersten Amplitude (A1), und in einer ersten Phase (S4) von Schritt b) eine erste Amplitude (E1) des gleichzeitig am Empfänger (7) empfangenen Antwortsignals erkannt wird (S3),
in einer zweiten Phase (S7) von Schritt a) der Sender (8) über die Amplitude gesteuert wird zum Emittieren (S4) des Testsignals mit einer zweiten Amplitude (A2), und in einer zweiten Phase (S8) von Schritt b) eine zweite Amplitude (E2) des gleichzeitig am Empfänger (7) empfangenen Antwortsignals erkannt wird (S5),
und in Schritt c) die Schnittstelle als "In Ordnung" oder "Nicht in Ordnung" klassifiziert wird (S6, S13), basierend auf der ersten und zweiten Amplitude (F1, E2) des überlagerten Antwortsignals, das in der ersten bzw. in der zweiten Phase empfangen wurde.

2. Verfahren gemäß Anspruch 1, wobei der Sender (8) an der ersten Amplitude (A1) des Testsignals kein Rauschen an der zweiten Frequenz erzeugen soll, während der Sender (8) an der zweiten Amplitude (A2) des Testsignals ein Rauschen an der zweiten Frequenz erzeugen soll, und wobei Schritt c) die Schritte c1) zum Vergleichen des Differenzbetrags (A) zwischen der ersten und zweiten Amplitude (F1, E2) des empfangenen Signals mit einem vorgegebenen Grenzwert (Δ₁) und c2) zum Klassifizieren (S11) der Schnittstelle als "Nicht in Ordnung", falles der Differenzbetrag unter einem vorgegebenen Grenzwert liegt, umfasst.

3. Verfahren gemäß Anspruch 2, wobei der Differenzbetrag (Δ) zwischen der ersten und der zweiten Amplitude (E1, E2) des empfangenen Signals oberhalb des vorgegebenen Grenzwerts (Δ₁) liegt, die zweite Amplitude (A2) des Testsignals reduziert wird und die Schritte b) und c1) wiederholt werden, bis der Differenzbetrag (Δ) unterhalb des vorgegebenen Grenzwerts liegt, und wobei die Schnittstelle als "Nicht in Ordnung" klassifiziert wird (S17), wenn die derart erhaltene zweite Amplitude (A2) unterhalb eines vorgegebenen Grenzwerts (Aₘᵢₙ) liegt.

4. Verfahren gemäß Anspruch 1, wobei der Sender an der ersten Amplitude des Testsignals kein Rauschen an der zweiten Frequenz erzeugen soll, und wobei, wenn die Differenz zwischen der ersten und der zweiten Amplitude des empfangenen Signals unterhalb eines vorgegebenen Grenzwerts liegt, die zweite Amplitude des Testsignals erhöht wird und die Schritte b) und c1) wiederholt werden, bis entweder die zweite Amplitude einen vordefinierten Maximalwert erreicht hat oder bis der Differenzbetrag oberhalb eines vordefinierten Grenzwerts liegt, und wobei die Schnittstelle als "Nicht in Ordnung" klassifiziert wird, wenn die auf diese Weise erhaltene zweite Amplitude unterhalb eines vordefinierten Grenzwerts liegt.

5. Verfahren gemäß Anspruch 1, wobei der Sender an der zweiten Amplitude des Testsignals ein Rauschen an der zweiten Frequenz erzeugen soll, und wobei, wenn die Differenz zwischen der ersten und der zweiten Amplitude des empfangenen Signals unterhalb eines vorgegebenen Grenzwerts liegt, die erste Amplitude des Testsignals verringert wird und die Schritte a) und c1) wiederholt werden, bis entweder die erste Amplitude einen vordefinierten Mindestwert erreicht hat oder bis der Differenzbetrag oberhalb eines vordefinierten Grenzwerts liegt, und wobei die Schnittstelle als "Nicht in Ordnung" klassifiziert wird, wenn die auf diese Weise erhaltene erste Amplitude oberhalb eines vordefinierten Grenzwerts liegt.

6. Verfahren gemäß einem der vorangegangenen Anspruche, wobei die Schritte a) bis c) regelmäßig wiederholt werden, und wobei das DMT-Signal mindestens einen mit Nutzlastdaten modulierten Träger umfasst.

7. Verfahren gemäß Anspruch 6, wobei die Schnittstelle (3) zwischen einer Teilnehmerleitung (4) und einem Kommunikationsnetzwerk (1, 2) liegt, und das des Weiteren einen Schritt d) zum Senden (S12, S19, S20) einer Meldung umfasst, die auf eine der ersten und zweiten Amplituden des empfangenen Signals, die Differenz zwischen diesen beiden Amplituden und das Ergebnis der Klassifizierung hinweist und die an eine zentrale Station (1) des Kommunikationsnetzwerks gerichtet ist.

8. Verfahren gemäß Anspruch 7, das des Weiteren den Schritt zum Senden eines Auslöserbefehls zur Durchführung der Schritte a) bis d) von der zentralen Station (1) des Netzwerks an diese Schnittstelle (3) umfasst.

## Revendications

1. Procédé de test d'une interface de communication bidirectionnelle comprenant un émetteur (8) et un récepteur (7) connectés à la même ligne de transmission (4), dans lequel :
a) un signal d'essai dans une première plage de fréquences est émis de façon répétée (S3, S7, S14) par l'émetteur (8), chacun desdits signaux d'essai émis étant associé à une marque temporelle de référence,
b) des signaux de réponse dans une seconde plage de fréquences associés auxdits signaux d'essai sont reçus (S4, S8) sur le récepteur (7) de telle sorte que les marques temporelles de référence de leurs signaux d'essai associés soient synchronisées, ce qui produit un signal de réponse superposé,
c) sur la base du signal de réponse superposé, l'interface est jugée comme étant en fonctionnement ou en panne (S11, S18),
et **caractérisé en ce que**
lors d'une première phase (S3) de l'étape a), l'émetteur (8) est réglé en amplitude pour émettre (S2) le signal d'essai dans une première plage de fréquences à une première amplitude (A1), et lors d'une première phase (S4) de l'étape b), une première amplitude (E1) du signal de réponse reçu au même moment sur le récepteur (7) est détectée (S3),
lors d'une seconde phase (S7) de l'étape a), l'émetteur (8) est réglé en amplitude pour émettre (S4) le signal d'essai à une seconde amplitude (A2), et lors d'une seconde phase (S8) de l'étape b), une seconde amplitude (E2) du signal de réponse reçu au même moment sur le récepteur (7) est détectée (S5),
et lors de l'étape c), l'interface est jugée (S6, S13) comme étant en fonctionnement ou en panne sur la base des première et seconde amplitudes (E1, E2) des signaux de réponse superposés obtenus lors desdites première et seconde phases, respectivement.

2. Procédé selon la revendication 1, dans lequel, à la première amplitude (A1) du signal d'essai, l'émetteur (8) est censé ne pas générer de bruit à la seconde fréquence tandis que à la seconde amplitude (A2) du signal d'essai, l'émetteur (8) est censé générer un bruit à la seconde fréquence, et l'étape c) comprend les étapes c1) consistant à comparer la différence (Δ) entre les première et seconde amplitudes (E1, E2) du signal reçu avec une limite donnée (Δ₁) et c2) consistant à juger (S11) l'interface comme étant en panne si la différence est inférieure à une limite donnée.

3. Procédé selon la revendication 2, dans lequel, si la différence (Δ) entre les première et seconde amplitudes (E1, E2) du signal reçu est supérieure à la limite donnée (Δ₁), la seconde amplitude (A2) du signal d'essai est réduite et les étapes b) et c1) sont répétées jusqu'à ce que la différence (Δ) soit inférieure à la limite donnée, et l'interface est jugée (S17) comme étant en panne si la seconde amplitude ainsi obtenue (A2) est inférieure à une limite prédéterminée (Aₘᵢₙ).

4. Procédé selon la revendication 1, dans lequel, à la première amplitude du signal d'essai, l'émetteur est censé ne pas générer de bruit à la seconde fréquence et si la différence entre les première et seconde amplitudes du signal reçu est inférieure à une limite donnée, la seconde amplitude du signal d'essai est augmentée et les étapes b) et c1) sont répétées jusqu'à ce que, soit la seconde amplitude ait atteint un niveau maximum prédéfini, soit la différence soit supérieure à la limite donnée, et l'interface est jugée comme étant en panne si la seconde amplitude ainsi obtenue est inférieure à une limite prédéterminée.

5. Procédé selon la revendication 1, dans lequel, à la première amplitude du signal d'essai, l'émetteur est censé générer un bruit à la seconde fréquence et si la différence entre les première et seconde amplitudes du signal reçu est inférieure à une limite donnée, la première amplitude du signal d'essai est diminuée et les étapes a) et c1) sont répétées jusqu'à ce que, soit la première amplitude ait atteint un niveau minimum prédéfini, soit la différence soit supérieure à la limite donnée, et l'interface est jugée comme étant en panne si la première amplitude ainsi obtenue est supérieure à une limite prédéterminée.

6. Procédé selon l'une quelconque des revendications précédentes, dans lequel les étapes a) à c) sont répétées périodiquement et dans lequel le signal DMT comprend au moins un signal porteur modulé avec des données utiles.

7. Procédé selon la revendication 6, dans lequel l'interface (3) se trouve entre une ligne d'abonné (4) et un réseau de communication (1, 2), comprenant en outre une étape d) consistant à transmettre (S12, S19, S20) un message indiquant l'une des première et seconde amplitudes du signal reçu, la différence entre ces deux amplitudes et le résultat du jugement, à une station centrale (1) du réseau de communication.

8. Procédé selon la revendication 7, comprenant en outre l'étape consistant à envoyer une commande de déclenchement afin d'effectuer les étapes a) à d) de la station centrale (1) du réseau à ladite interface (3).
